(19) Europäisches Patentamt
European Patent Office
Office européen des brevets

(11) EP 1 874 856 B1

(12) **EUROPÄISCHE PATENTSCHRIFT**

(45) Veröffentlichungstag und Bekanntmachung des Hinweises auf die Patenterteilung:
**13.07.2011 Patentblatt 2011/28**

(21) Anmeldenummer: **06723903.8**

(22) Anmeldetag: **31.03.2006**

(51) Int Cl.:
***C08K 5/3492*** (2006.01) ***B32B 27/08*** (2006.01)
***B32B 27/18*** (2006.01) ***B32B 27/30*** (2006.01)
***B32B 27/36*** (2006.01)

(86) Internationale Anmeldenummer:
**PCT/EP2006/002943**

(87) Internationale Veröffentlichungsnummer:
**WO 2006/108520 (19.10.2006 Gazette 2006/42)**

(54) **UV-STABILISIERTE POLYCARBONATFORMKÖRPER**

UV-STABILIZED MOLDED POLYCARBONATE PRODUCTS

CORPS MOULES EN POLYCARBONATE STABLES AUX UV

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.04.2005 DE 102005017023**

(43) Veröffentlichungstag der Anmeldung:
**09.01.2008 Patentblatt 2008/02**

(73) Patentinhaber: **Bayer MaterialScience AG**
**51368 Leverkusen (DE)**

(72) Erfinder:
- **BUCKEL, Frank**
  **47800 Krefeld (DE)**
- **STOLLWERCK, Gunther**
  **47800 Krefeld (DE)**
- **MALEIKA, Robert**
  **40231 Düsseldorf (DE)**

(56) Entgegenhaltungen:
**EP-A- 1 033 243** **GB-A- 2 290 745**
**US-A- 5 061 558** **US-A- 5 783 307**
**US-A1- 2004 209 020** **US-A1- 2005 031 855**

- **DATABASE WPI Section Ch, Week 200127 Derwent Publications Ltd., London, GB; Class A14, AN 2001-260217 XP002389785 & JP 2000 327802 A (MITSUBISHI RAYON CO LTD) 28. November 2000 (2000-11-28)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 874 856 B1

## Beschreibung

Die vorliegende Erfindung betrifft ein mehrschichtiges Erzeugnis umfassend eine erste und eine zweite Schicht, wobei die zweite Schicht Polycarbonat enthält, und wobei die erste Schicht eine UV-Schutzschicht auf Basis von Polyalkyl (meth)acrylat ist, die ein biphenylsubstituiertes Triazin als UV-Stabilisator enthält. Außerdem betrifft die Erfindung die Herstellung dieser mehrschichtigen Erzeugnisse und Erzeugnisse, wie z.B. Verscheibungen, die die genannten mehrschichtigen Erzeugnisse enthalten.

Formkörper aus Polycarbonat sind bereits seit längerem bekannt. Polycarbonat hat jedoch den Nachteil, dass es nicht selbst inhärent UV-stabil ist. Die Empfindlichkeitskurve von Bisphenol A-Polycarbonat weist die höchste Empfindlichkeit zwischen 320 nm und 330 nm auf. Unterhalb von 300 nm gelangt keine Sonnenstrahlung auf die Erde, und oberhalb von 350 nm ist dieses Polycarbonat so unempfindlich, dass keine Vergilbung mehr stattfindet.

Um Polycarbonat vor dem schädlichen Einfluss der UV-Stahlen in der Atmosphäre zu schützen, werden allgemein UV-Stabilisatoren eingesetzt, die die UV-Strahlung absorbieren und in unschädliche thermische Energie umwandeln.

Vorteilhaft für einen dauerhaften Schutz ist es dabei, die schädliche UV-Strahlung bereits vor Erreichen der Polycarbonatoberfläche effektiv herauszufiltern, wie es durch die Verwendung von UV-Schutz-Schichten, beispielsweise UV-Absorber-haltige Koextrusionsschichten, UV-Absorber-haltige Folien oder auch UV-Absorber-haltige Lacke, auf Polycarbonat möglich ist.

Typische UV-Absorber - Klassen, die bekanntermaßen hierfür zum Einsatz kommen können , sind 2-Hydroxybenzophenone, 2-(2-Hydroxyphenyl)benzotriazole, 2-(2-Hydroxyphenyl)-1,3,5-triazine, 2-Cyanacrylate und Oxalanilide.

Im Folgenden wird beispielhaft der Stand der Technik zu mehrschichtigen Erzeugnissen zusammengefasst.

EP-A 0 110 221 offenbart Platten aus zwei Schichten Polycarbonat, wobei eine Schicht wenigstens 3 Gew.-% eines UV-Absorbers enthält. Die Herstellung dieser Platten kann gemäß EP-A 0 110 221 durch Coextrusion erfolgen.

EP-A 0 320 632 offenbart Formkörper aus zwei Schichten aus thermoplastischem Kunststoff, bevorzugt Polycarbonat, wobei eine Schicht spezielle substituierte Benzotriazole als UV-Absorber enthält. EP-A 0 320 632 offenbart auch die Herstellung dieser Formkörper durch Coextrusion. EP-A 0 247 480 offenbart mehrschichtige Platten, in denen neben einer Schicht aus thermoplastischern Kunststoff eine Schicht aus verzweigtem Polycarbonat vorhanden ist, wobei die Schicht aus Polycarbonat spezielle substituierte Benzotriazole als UV-Absorber enthält. Die Herstellung dieser Platten durch Coextrusion wird ebenfalls offenbart.

EP-A 0 500 496 offenbart Polymerzusammensetzungen, die mit spezielle Triazinen gegen UV-Licht stabilisiert sind und deren Verwendung als Außenschicht in Mehrschichtsystemen. Als Polymere werden Polycarbonat Polyester, Polyamide, Polyacetale, Polyphenylenoxid und Polyphenylensulfid genannt.

GB 2,290,745 beschreibt thermoplastische Artikel, wobei die Substratschicht und die Deckschicht aus dem gleichen thermoplastischen Harz oder aus verschiedenen thermoplastischen Harzen sein können. Eine Reihe von Harzen wird aufgezählt .Weiterhin werden verschiedene Hydroxyphenyl-s-Triazine als UV-Stabilisatoren erwähnt. Die spezielle Kombination der vorliegenden Erfindung wird nicht erwähnt.

US 2004/0209020 beschreibt verschiedene Polymermaterialien und UV-Absorber, wobei u.a. auch Hydroxyphenyltriazine als UV Absorber genannt werden. Bei den Polymermeaterialien handelt es sich um Polyesterfilme, wobei sich der UV-Absorber in der Polyesterschicht befindet, während er nach vorliegender Erfindung in der PMMA-Schicht ist.

US 2005/0031855 beschreibt Mehrschichtartikel die aus einer Basisschicht (ein thermoplastisches Harz) und einer zweiten Schicht, die ein thermoplastisches (Co)Polyformal enthält. Die Schutzschicht ist die Polyformalschicht. Die Basisschicht kann aus Polycarbonat, Copolycarbonat, Polyacrylat, Polymethyl(meth)acrylat oder Mischungen sein. Es wird erwähnt, dass diese Schichten UV-Additive enthalten können, wobei die UV-Absorber aus einer Vielzahl von Verbindungen ausgewählt sein können.

US 5,783,307 beschreibt UV-stabitisierte Mehrschichtstrukturen, die eine UV-Schutzschicht und eine polymere Basisschicht enthalten. Die Schutzschicht kann Polycarbonat, Polyester oder auch ein Acrylharz sein und enthält einen optischen Aufheller und einen UV-Absorber. Die polymere Basisschicht enthält Polyester oder ein Polycarbonat. Als UV-Absorber werden eine Reihe von Strukturklassen erwähnt.

US-A- 5,061,558 beschreibt ein mehrschichtiges Laminatmit einer Polycarbonatschicht und einer UV-stabilisierten Polymethylmethacrylatschicht; ein Biphenylsubstituierte Triazine als UV-Stabilisator werden nicht genannt.

Die spezielle Kombination der vorliegenden Erfindung wird in diesen Dokumenten nicht beschrieben.

Es hat sich jedoch gezeigt, dass die bekannten UV-stabilisierten Polycarbonatformkörper für manche Anwendungen, insbesondere für Außenanwendungen mit dauerhaft hohen Anforderungen hinsichtlich des visuellen Eindrucks wie beispielsweise Verscheibungen eine noch ungenügende Langzeitstabilität gegen Vergilbung aufweisen.

Für solche Anwendungen ist es erforderlich, dass ein Polycarbonatformkörper unter einer Einstrahlung von 30 $MJ/m^2$ bei 340 nm (entspricht 10 Jahren Außenbewitterung in Florida) um nicht mehr als $\Delta$ YI von 3 vergilbt (YI = Yellowness Index).

Die Bewitterung erfolgt bei diesem Test in einem Atlas Ci 5000 Weathcrometer mit einer Bestrahlungsstärke

von 0.75 $W/m^2/nm$ bei 340 nm und einem Trocken/-Beregnungszyklus von 102:18 Minuten. Die Schwarztafeltemperatur beträgt 70°C, die Probenraumtemperatur 55°C und die Luftfeuchtigkeit 40 %.

Der vorliegenden Erfindung liegt die Aufgabe zugrunde, Polycarbonatformkörper zur Verfügung zu stellen, die unter einer Einstrahlung von 30 $MJ/m^2$ bei 340 nm um nicht mehr als einen $\Delta$ YI von 3 unter den genannten Bedingungen vergilbt. Hierfür wurde gefunden, dass die Kombination aus UV-Absorber und Matrix eine ausreichende Extinktion und geringe Degradation aufweisen muss.

Diese Aufgabe wird überraschendenweise gelöst durch ein mehrschichtiges Erzeugnis umfassend eine erste Schicht (A) und eine zweite Schicht (B), wobei die erste Schicht (A) eine UV-Schutzschicht aus Polyalkyl(meth)acrylat ist, die einen UV-Stabilisator gemäß Formel (I) enthält, und die zweite Schicht (B) ein Polycarbonat enthält. Die UV-Schutzschicht (A) kann dabei die Form einer Folie, einer koextrudierten Schicht oder einer gehärteten Lackschicht annehmen.

Dieses mehrschichtige Erzeugnis ist Gegenstand der vorliegenden Erfindung.

Das erfindungsgemäße mehrschichtige Erzeugnis kann weitere Schichte umfassen, insbesondere eine weitere UV-Schutzschicht (C), die ebenfalls eine Schicht aus Polyalkyl(meth)acrylat ist, die einen UV-Stabilisator gemäß Formel (I) enthält und die Form einer Folie, einer koextrudierten Schicht oder einer gehärteten Lackschicht annehmen kann. Die Schichtabfolge beträgt in diesem Fall (A)-(B)-(C), und die Schichten (A) und (C) können dieselbe oder unterschiedliche Zusammensetzungen haben.

Der in den Schichten (A) und gegebenenfalls (C) der erfmdungsgemäßen mehrschichtigen Erzeugnissen verwendete UV-Absorber hat die allgemeine Formel (I)

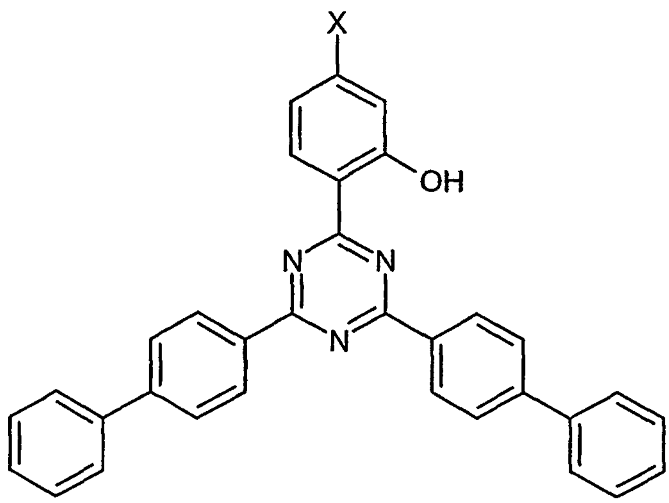

(I)

wobei X $OR^1$ ; $OCH_2CH_2OR^1$; $OCH_2CH(OH)CH_2OR^1$ oder $OCH(R^2)COOR^3$ bedeutet, dabei steht, $R^1$ für jeweils verzweigtes oder unverzweigtes $C_1$-$C_{13}$-Alkyl, $C_2$-$C_{20}$-Alkenyl, $C_6$-$C_{12}$-Aryl oder -CO-$C_1$-$C_{18}$-Alkyl, $R^2$ ist H oder verzweigtes oder unverzweigtes $C_1$-$C_8$-Alkyl, und $R^3$ $C_1$-$C_{12}$-Alkyl; $C_2$-$C_{12}$Alkenyl oder $C_5$-$C_6$-Cycloalkyl bedeutet.

Für UV-Schutzschichten (A) bzw. (C) in Form von Folien oder Koextrusionsschichten ist X bevorzugt $OR^1$; besonders bevorzugt mit $R^1 = CH_2CH(CH_2CH_3)C_4H_9$

Für UV-Schutzschichten aus gehärteten Lackformulierungen ist X bevorzugt $OCH(R^2)COOR^3$; besonders bevorzugt mit $R^2 = CH_3$ und $R^3 = C_8H_{17}$

Solche biphenylsubstituierten Triazine der allgemeinen Formel I sind aus WO 96/28431; DE 197 39 797; WO 00/66675; US 6225384; US 6255483; EP 1 308 084 und FR 2812299 prinzipiell bekannt.

Erfindungsgemäße UV-Schutzschichten (A) bzw. (C) aus gehärteten Lackformulierungen enthalten als Bindermaterial ein physikalisch trocknendes Polyalkyl(meth)acrylatharz, enthaltend vorzugsweise Methylmethacrylat als Hauptkomponente und eventuell ein weiteres Alkyl(meth)acrylat mit längerer, linearer oder verzeigter Alkylkette (-$C_nH_{2n+1}$ mit n>1), bevorzugt $1 \leq n \leq 10$, besonders bevorzugt linear mit n = 3 (Butylmethacrylat). Bevorzugt beträgt das Verhältnis der beiden Methacrylatmonomereinheiten 75 bis 100% Methylmethacrylat bzw. 25 bis 0% Alkylmethacrylat, bevorzugt 85 bis 100% Methylmethacrylat bzw. 15% bis 0% Alkylmethacrylat, besonders bevorzugt 90 bis 100% Methylmethacrylat und 10% bis 0% Alkylmethacrylat (Angabe in Gew.-%).

Erfindungsgemäße UV-Schutzschichten (A) bzw. (C) in Form von Folien und Koextrusionsschichten enthalten als Polymermatrix ein Polyalkyl(meth)acrylat, bestehend aus Alkyl(meth)-acrylat-Monomeren, bevorzugt mit Alkylket-

tenlängen unter 10 Kohlenstoffatomen ($-C_nH_{2n+1}$ mit $n < 10$), besonders bevorzugt ausschließlich mit n=1 (Methylmethacrylat).

Da für einen dauerhaften UV-Schutz eine bestimmte Mindestextinktion der UV-Schutzschicht benötigt wird, hängt die erforderliche UV-Absorber Konzentration von der Schichtdicke ab.

Die erfindungsgemäßen UV-Schutzschichten aus gehärteten Lackformulierungen enthalten bei Schichtdicken von 1 bis 100 µm, bevorzugt 1 bis 30 µm, besonders bevorzugt 1 bis 10 µm 0,5 bis 20 Gew.-%, bevorzugt 1 bis 15 Gew.-%, besonders bevorzugt 1,5 bis 10 Gew.-% bezogen auf den Feststoffgehalt der Lackformulierung an UV-Absorber der Formel (I), wobei Formulierungen mit Schichtdicken nach Applizieren und Härten von 1 µm mindestens 10 Gew.-%, bevorzugt ≥15 Gew.%, solche von 5 µm mindestens 2 Gew.-% bevorzugt ≥3 Gew.% und solche von 10 µm mindestens 1 Gew.-% bevorzugt ≥1,5 Gew.% enthalten, höchstens die o.g. Mengen an UV-Absorber enthaltend.

Die erfindungsgemäßen UV-Schutzschichten aus Koextrusionsschichten enthalten bei Schichtdicken von 1 bis 500 µm, bevorzugt 1 bis 100 µm, besonders bevorzugt 2 bis 50 µm 0,05 bis 20 Gew.-%, bevorzugt 0,1 bis 15 Gew.-%, besonders bevorzugt 0,5 bis 10 Gew.% an UV-Absorber der Formel (I), wobei Koextrusionsschichten mit einer Schichtdicke von 2 µm mindestens 10 Gew.-%, bevorzugt ≥ 15 Gew.-%, solche von 10 µm mindestens 2 Gew.-%, bevorzugt ≥3 Gew.% und solche von 30 µm mindestens 0,7 Gew.-%, bevorzugt ≥1 Gew.% enthalten, höchstens die o.g. Mengen an UV-Absorber enthaltend.

Die erfindungsgemäßen UV-Schutzschichten aus Folien enthalten bei Schichtdicken von 2 µm bis 2 mm, bevorzugt 50 µm bis 1 mm, besonders bevorzugt 80 µm bis 500 µm 0,01 bis 20 Gew.-%, bevorzugt 0,02 bis 5 Gew.-%, besonders bevorzugt 0,04 bis 2 Gew.-% an UV-Absorber der Formel (I), wobei Folien mit einer Schichtdicke von 80 µm mindestens 0,25 Gew.-%, bevorzugt ≥0,4 Gew.-%, solche von 200 µm mindestens 0,1 Gew.-%, bevorzugt ≥0,15 Gew.% und solche von 500 µm mindestens 0,04 Gew.-%, bevorzugt ≥0,06 Gew.% enthalten, höchstens die o.g. Mengen an UV-Absorber enthaltend.

Je dicker also Schicht (A) ist, umso weniger UV-Absorber wird benötigt.

Eine weitere Stabilisierung der UV-Schutzschicht kann erzielt werden, indem neben den biphenylsubstituierten Triazinen, also den eigentlichen UV-Absorbern, noch sogenannte HALS - Systeme (Hindered Amine Light Stabilizer) der allgemeinen Formel (II) zum Einsatz kommen.

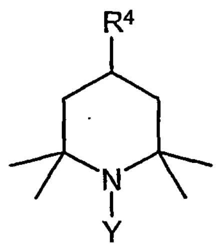

wobei Y H; $R^1$ oder $OR^1$ darstellt und $R^1$ die gleiche Bedeutung hat wie in Formel (I) $R^4$ setzt sich zusammen aus:Z-$R^5$-Z-$R^6$;

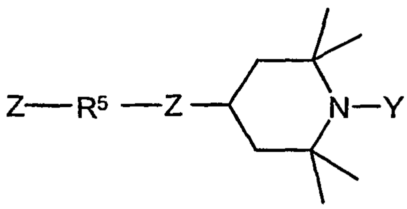

oder

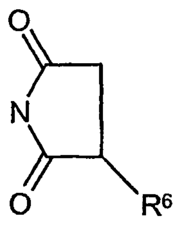

damit ergeben sich folgende Formeln

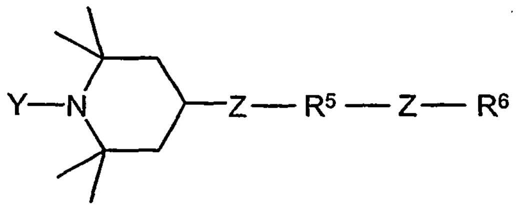

Formel IIa

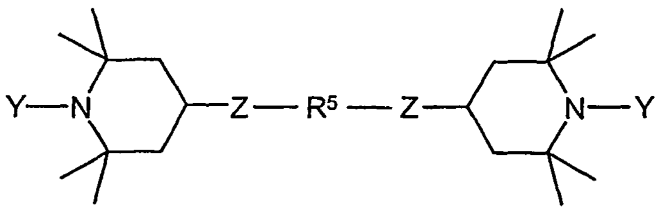

Formel IIb

und

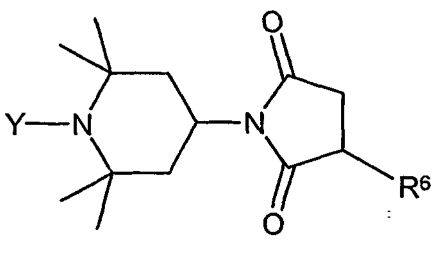

Formel IIc

wobei:

·Z· eine divalente funktionelle Gruppe wie ·COO·; ·NH· oder ·NHCO·ist

·$R^5$· ist ein divalenter organischer Rest wie·$(CH_2)_n$· mit n=0 bis 12; $C=CH-Ph-OCH_3$ ;

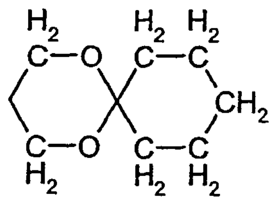

oder

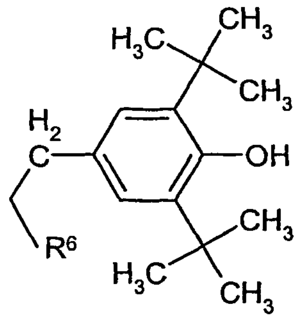

$R^6$ ist H oder $C_1$-$C_{20}$Alkyl

bevorzugt ist für UV-Schutzschichten aus gehärteten Lackformulierungen Y=$OR^1$ und $R^4$=

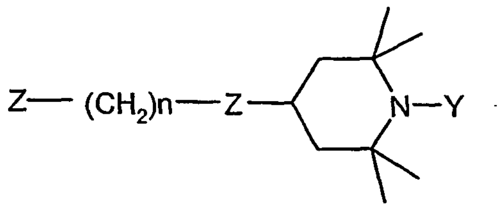

besonders bevorzugt ist Y=$OR^1$ mit $R^1$=C1-C13 Alkyl und $R^4$ =

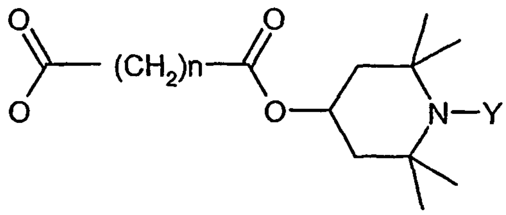

damit ergibt sich

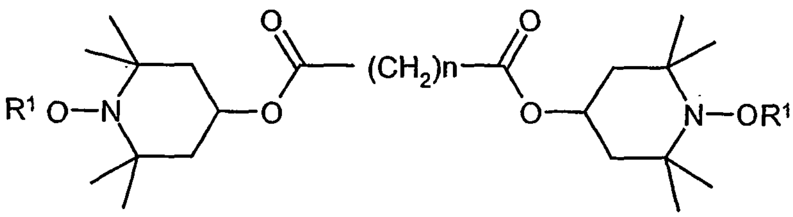

Formel IId

Die erfindungsgemäßen UV-Schutzschichten aus gehärteten Lackformulierungen enthalten dabei 0 bis 5 Gew.-%, bevorzugt 0 bis 3 Gew.-%, besonders bevorzugt 0,5 bis 2 Gew.-% der Verbindung der Formel (II) bezogen auf den Feststoffgehalt der Lackformulierung. Bei Verwendung der besonders bevorzugten Menge des besonders bevorzugten HALS Systems (II) reduziert sich die notwendige Menge an UV-Absorber (I) auf bevorzugt ≥10 Gew.-% bei einer Schichtdicke nach Applizieren und Härten von 1μm, bevorzugt ≥2 Gew.-% bei 5 μm bzw. bevorzugt ≥1 Gew.-% bei 10 μm.

Auch im Fall der UV-Schutzschichten aus Koextrusionsschichten bzw. aus Folien können HALS-Systeme in Mengen von 0 bis 3 Gew.-% eingesetzt werden. Hier sind jedoch aufgrund der höheren Verarbeitungstemperaturen höhermolekulare HALS-Systeme zu bevorzugen, bei denen die funktionelle Gruppe

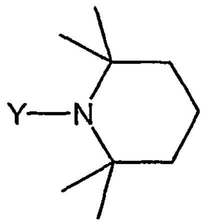

der allgemeinen Formel II mehr als zweimal pro Molekül enthalten ist.

Besonders bevorzugt sind hochmolekulare HALS-Systeme, deren Gewichtsverlust bei 300°C bestimmt über TGA mit einer Heizrate von 20°C pro min in Luft ≤3 Gew.-% ist, wie beispielsweise bei Chimassorb 119 der Firma Ciba Specialty Chemicals (Formel IIe)

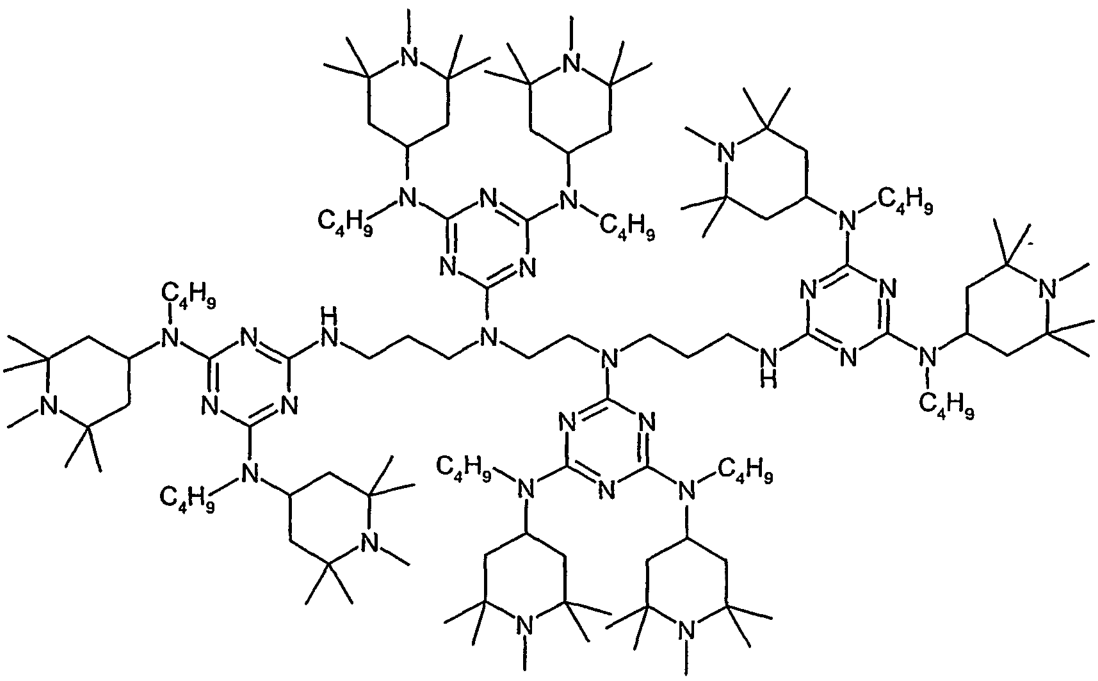

Formel IIe

Geeignete Polycarbonate für die zweite Schicht (B) der erfmdungsgemäßen mehrschichtigen Erzeugnisse sind alle bekannten Polycarbonate, dies können Homopolycarbonate, Copolycarbonate und thermoplastische Polyestercarbonate sein.

Sie haben bevorzugt mittlere Molekulargewichte $\overline{M}_w$ von 18.000 bis 40.000, vorzugsweise von 22.000 bis 36.000 und insbesondere von 24.000 bis 33.000, ermittelt durch Messung der relativen Lösungsviskosität in Dichlormethan oder in Mischungen gleicher Gewichtsmengen Phenol/o-Dichlorbenzol geeicht durch Lichtstreuung.

Zur Herstellung von Polycarbonaten sei beispielhaft auf "Schnell, Chemistry and Physics of Polycarbonats, Polymer Reviews, Vol. 9, Interscience Publishers, New York, London, Sydney 1964", und auf "D.C. PREVORSEK, B.T. DEBONA and Y. KESTEN, Corporate Research Center, Allied Chemical Corporation, Moristown, New Jersey 07960, 'Synthesis of Poly(ester)carbonate Copolymers' in Journal of Polymer Science, Polymer Chemistry Edition, Vol. 19,

75-90 (1980)", und auf "D. Freitag, U. Grigo, P.R. Müller, N. Nouvertne, BAYER AG, 'Polycarbonates' in Encyclopedia of Polymer Science and Engineering, Vol. 11, Second Edition, 1988, Seiten 648-718" und schließlich auf "Dres. U. Grigo, K. Kircher und P.R. Müller 'Polycarbonate' in Becker/Braun, Kunststoff-Handbuch, Band 3/1, Polycarbonate, Polyacetale, Polyester, Celluloseester, Carl Hanser Verlag München, Wien 1992, Seiten 117-299" verwiesen.

Die Herstellung der Polycarbonate erfolgt vorzugsweise nach dem Phasengrenzflächenverfahren oder dem Schmelze-Umesterungsverfahren und wird im Folgenden beispielhaft an dem Phasengrenzflächenverfahren beschrieben.

Als Ausgangsverbindungen bevorzugt einzusetzende Verbindungen sind Bisphenole der allgemeinen Formel

HO-R-OH,

worin R ein divalenter organischer Rest mit 6 bis 30 Kohlenstoffatomen ist, der eine oder mehrere aromatische Gruppen enthält.

Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)-sulfone, Bis(hydroxyphenyl)ketone und $\alpha$, $\alpha$'-Bis(hydroxyphenyl)- diisopropylbenzole gehören.

Besonders bevorzugte Bisphenole, die zu den vorgenannten Verbindungsgruppen gehören, sind Bisphenol-A, Tetraalkylbisphenol-A, 4,4-(meta-Phenylendiisopropyl) diphenol (Bisphenol M), 4,4-(para-Phenylendiisopropyl) diphenol, 1,1-Bis-(4-hydroxyphenyl)-3,3,5-trimethylcyclohexan (BP-TMC) sowie gegebenenfalls deren Gemische.

Bevorzugt werden die erfindungsgemäß einzusetzenden Bisphenolverbindungen mit Kohlensäureverbindungen, insbesondere Phosgen, oder beim Schmelzeumesterungsprozess mit Diphenylcarbonat bzw. Dimethylcarbonat, umgesetzt.

Polyestercarbonate werden bevorzugt durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Phthalsäure, Terephthalsäure, Isophthalsäure, 3,3'- oder 4,4'-Diphenyldicarbonsäure und Benzophenondicarbonsäuren. Ein Teil, bis zu 80 Mol.-%, vorzugsweise von 20 bis 50 Mol-% der Carbonatgruppen in den Polycarbonaten können durch aromatische Dicarbonsäureester-Gruppen ersetzt sein.

Beim Phasengrenzflächenverfahren verwendete inerte organische Lösungsmittel sind beispielsweise Dichlormethan, die verschiedenen Dichlorethane und Chlorpropanverbindungen, Tetrachlormethan, Trichlormethan, Chlorbenzol und Chlortoluol, vorzugsweise werden Chlorbenzol oder Dichlormethan bzw. Gemische aus Dichlormethan und Chlorbenzol eingesetzt.

Die Phasengrenzflächenreaktion kann durch Katalysatoren wie tertiäre Amine, insbesondere N-Alkylpiperidine oder Oniumsalze beschleunigt werden. Bevorzugt werden Tributylamin, Triethylamin und N-Ethylpiperidin verwendet. Im Falle des Schmelzeumesterungsprozesses werden bevorzugt die in DE-A 4 238 123 genannten Katalysatoren verwendet.

Die Polycarbonate können durch den Einsatz geringer Mengen Verzweiger bewusst und kontrolliert verzweigt werden. Einige geeignete Verzweiger sind: Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan; Tri-(4-hydroxyphenyl)-phenylmethan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäure-ester; Tetra-(4-hydroxyphenyl)-methan; Tetra-(4-(4-hydroxyphenyl-isopropyl)-phenoxy)-methan; $\alpha,\alpha'\alpha''$-Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4''-dihydroxytriphenyl)-methyl)-benzol und insbesondere: 1,1,1-Tri-(4-hydroxyphenyl)-ethan und Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern bzw. Mischungen der Verzweigern, können mit den Diphenolen zusammen eingesetzt werden aber auch in einem späteren Stadium der Synthese zugegeben werden.

Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet in Mengen von 1 - 20 Mol-%, bevorzugt 2 - 1,0 Mol-% je Mol Bisphenol. Bevorzugt sind Phenol, 4-tert.-Butylphenol bzw. Cumylphenol.

Kettenabbrecher und Verzweiger können getrennt oder aber auch zusammen mit dem Bisphenol den Synthesen zugesetzt werden.

Die Herstellung der Polycarbonate nach dem Schmelzeumesterungsprozess ist in DE-A 4238 123 beispielhaft beschrieben.

Erfmdungsgemäß bevorzugte Polycarbonate für die zweite Schicht des erfindungsgemäßen mehrschichtigen Erzeugnisses sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und

1,1-Bis-(4-hydroxyphenyl)-3,3,5-trimethylcyclohexan.

Das Homopolycarbonat auf Basis von Bisphenol A ist besonders bevorzugt.

Das Polycarbonat kann Stabilisatoren enthalten. Geeignete Stabilisatoren sind beispielsweise Phosphine, Phosphite oder Si enthaltende Stabilisatoren und weitere in EP-A 0 500 496 beschriebene Verbindungen. Beispielhaft seien Triphenylphosphite, Diphenylalkylphosphite, Phenyldialkylphosphite, Tris-(nonylphenyl)phosphit, Tetrakis-(2,4-di-tert.-butylphenyl)-4,4'-biphenylen-diphosponit und Triarylphosphit genannt. Besonders bevorzugt sind Triphenylphosphin und Tris-(2,4-di-tert.-butylphenyl)phosphit.

Ferner kann die Polycarbonat enthaltende zweite Schicht (B) des erfindungsgemäßen mehrschichtigen Erzeugnisses 0,01 bis 0,5 Gew.-% der Ester oder Teilester von ein- bis sechswertigen Alkoholen, insbesondere des Glycerins, des Pentaerythrits oder von Guerbetalkoholen enthalten.

Einwertige Alkohole sind beispielsweise Stearylalkohol, Palmitylalkohol und Guerbetalkohole.

Ein zweiwertiger Alkohol ist beispielsweise Glycol.

Ein dreiwertiger Alkohol ist beispielsweise Gylcerin.

Vierwertige Alkohole sind beispielsweise Pentaerythrit und Mesoerythrit.

Fünfwertige Alkohole sind beispielsweise Arabit, Ribit und Xylit.

Sechswertige Alkohole sind beispielsweise Mannit, Glucit (Sorbit) und Dulcit.

Die Ester sind bevorzugt die Monoester, Diester, Triester, Tetraester, Pentaester und Hexaester oder deren Mischungen, insbesondere statistische Mischungen, aus gesättigten, aliphatischen $C_{10}$ bis $C_{36}$-Monocarbonsäuren und gegebenenfalls Hydroxy-Monocarbonsäuren, vorzugsweise mit gesättigten, aliphatischen $C_{14}$ bis $C_{32}$-Monocarbonsäuren und gegebenenfalls Hydroxy-Monocarbonsäuren.

Die kommerziell erhältlichen Fettsäureester, insbesondere des Pentaerythrits und des Glycerins, können herstellungsbedingt <60 % unterschiedlicher Teilester enthalten.

Gesättigte, aliphatische Monocarbonsäuren mit 10 bis 36 C-Atomen sind beispielsweise Caprinsäure, Laurinsäure, Myristinsäure, Palmitinsäure, Stearinsäure, Hydroxystearinsäure, Arachinsäure, Behensäure, Lignocerinsäure, Cerotinsäure und Montansäuren.

Bevorzugte gesättigte, aliphatische Monocarbonsäuren mit 14 bis 22 C-Atomen sind beispielsweise Myristinsäure, Palmitinsäure, Stearinsäure, Hydroxystearinsäure, Arachinsäure und Behensäure.

Besonders bevorzugt sind gesättigte, aliphatische Monocarbonsäuren wie Palmitinsäure, Stearinsäure und Hydroxystearinsäure.

Die gesättigten, aliphatischen $C_{10}$ bis $C_{36}$-Carbonsäuren und die Fettsäureester sind als solche entweder literaturbekannt oder nach literaturbekannten Verfahren herstellbar. Beispiele für Pentaerythritfettsäureester sind die der besonders bevorzugten, vorstehend genannten Monocarbonsäuren.

Besonders bevorzugt sind Ester des Pentaerythrits und des Glycerins mit Stearinsäure und Palmitinsäure.

Besonders bevorzugt sind auch Ester von Guerbetalkoholen und des Glycerins mit Stearinsäure und Palmitinsäure und gegebenenfalls Hydroxystearinsäure.

Die erfindungsgemäßen mehrschichtigen Erzeugnisse können organische Farbstoffe, anorganische Farbpigmente, Fluoreszenzfarbstoffe und besonders bevorzugt optische Aufheller enthalten.

Die Herstellung der erfmdungsgemäßen UV-Schutz-Schichten (A) bzw. (C) erfolgt entweder über die Herstellung eines Compounds (a) aus (a1) einem Polyalkyl(meth)acrylat, bestehend aus Alkyl(meth)acrylat, bevorzugt mit Alkylkettenlängen unter 10 Kohlenstoffatomen (-CnH2n+1 mit n < 10), besonders bevorzugt ausschließlich mit n=1 (Methylmethacrylat) und (a2) einem biphenylsubstituierten Triazins der allgemeinen Formel (I). Anschließend wird das Compound (a) entweder (i) mit Polycarbonat in der Weise koextrudiert, dass sich eine dünne UV-Schutzschicht aus Compound (a) gut haftend auf der Polycarbonatoberfläche befindet, oder (ii) das Compound (a) wird zu einer dünnen Folie weiterverarbeitet, die anschließend mit Polycarbonat zu einem gut haftenden Verbund hinterspritzt oder laminiert wird.

Alternativ erfolgt die Herstellung der erfindungsgemäßen UV-Schutz-Schichten (A) bzw. (C) über das Einbringen (b2) eines biphenylsubstituierten Triazins der allgemeinen Formel (I) in eine Lackformulierung (b) enthaltend (b1) ein Polyalkyl(meth)acrylatharz, enthaltend Methylmethacrylat als Hauptkomponente und eventuell ein weiteres Alkylmethacrylat mit längerer, linearer oder verzeigter Alkylkette ($-C_nH_{2n+1}$ mit n>1), bevorzugt $1 \leq n \leq 10$, besonders bevorzugt linear mit n = 3 (Butylmethacrylat), und einem oder mehreren Lösemitteln, sowie eventuell weiteren Lackadditiven wie beispielsweise Füllstoffe, Verlaufmittel, Radikalfänger usw.. Anschließend wird die UV-Absorber-haltige Lackformulierung (b) mittels Fluten, Tauchen, Sprühen, Aufwalzen oder Aufschleudem auf die Oberfläche eines Polycarbonatformteils aufgebracht und anschließend physikalisch getrocknet, so dass sich eine gut haftende Beschichtung auf PC ergibt.

Ein weiterer Vorteil der so hergestellten erfindungsgemäßen mehrschichtigen Erzeugnisse liegt darin, dass sich die UV-Schutzschicht mit kratzfesten bzw. abriebbeständigen Beschichtungssystemen überbeschichten lässt. Dazu wird eine Formulierung eines kratzfesten bzw. abriebsbeständigen Lackes beispielsweise aber nicht ausschließlich ein Polysiloxanlack, eine Silikatbeschichtung (Wasserglas), oder auch eine nanopartikelhaltige Formulierung durch Fluten, Tauchen, Sprühen, Aufwalzen oder Aufschleudem auf die Oberfläche der UV-Schutzschicht aufgebracht und anschließend zu einem gut haftenden Verbund PC / UV-Schutz-Schicht / Kratzfest-Schicht ausgehärtet.

Erfindungsgemäß sind diejenigen mehrschichtigen Erzeugnis bevorzugt, die ausgewählt sind aus der Gruppe bestehend aus Platten, Folien und dreidimensionalen Formteilen.

Ebenfalls Gegenstand der vorliegenden Erfindung ist die Verwendung besagter mehrschichtiger Erzeugnisse insbesondere für Außenanwendungen mit dauerhaft hohen Anforderungen hinsichtlich des visuellen Eindrucks, wie beispielsweise der Verscheibung.

Die Erfindung wird durch die folgenden Beispiele weiter erläutert ohne auf diese beschränkt zu sein. Die erfindungsgemäßen Beispiele geben lediglich bevorzugte Ausführungsformen der vorliegenden Erfindung wieder.

## Beispiele

### Beispiel 1:

Bisphenol A Polycarbonat (Typ Makrolon 2808 (mittelviskoses BPA-PC (MFR 10 g/10min nach ISO 1133 bei 300°C und 1,2kg), ohne UV-Stabilisierung) beschichtet mit einer UV-Schutz-Schicht aus CGL 479 der Firma Ciba Specialty Chemicals (biphenylsubstituiertes Triazin der Formel I mit X=OCH(CH3)COOC8H17) in einer PMMA-Lack-Matrix

Herstellung der Lackformulierung:

Zur Bestimmung des Feststoffgehaltes der verwendeten Lackformulierung wurden 4 g eines Polymethacrylats bestehend aus 92 Gew.% Methylmethacrylat und 8 Gew.% Butylmethacrylat (bestimmt über $^1$H-NMR, Mw=41,5 kg/mol bestimmt über GPC kalibriert auf PS) gelöst in einer Mischung aus Ethylacetat, Methoxypropanol; Diacetonalkohol und Butanon mit 2 g eines als Verdünner eingesetzten Lösemittelgemisches aus Ethylacetat, Butanol und Methoxypropanol 1 h bei 100°C eingeengt und der zurückbleibende Feststoff ausgewogen. Die erhaltenen 0,874g entsprechen einem Feststoffgehalt von 14,56 %.

20 g des als Verdünner eingesetzten Lösemittelgemisches (s.o.) werden mit 0,874 g CGL 479 versetzt (dies entspricht 10 Gew.-% bezogen auf den Feststoffgehalt des Lackes ohne UV-Absorber) und ca. 5 min bei RT gerührt. Zu dieser homogenen Lösung wurden 40 g des gelösten Polymethacrylats (s.o.) gegeben und noch mal ca. 5 min bei RT gerührt, wodurch die einsatzbereite homogene UV-Schutz-Lackformulierung erhalten wurde

Beschichtung der Substrate mit der UV-Schutz-Lackformulierung:

Die verwendeten spritzgegossenen Polycarbonat-Platten in optischer Qualität aus Makrolon 2808 der Größe 10 x 15 x 0,32cm wurden gereinigt, getrocknet und mit ionisierter Luft abgeblasen. Anschließend wurde die UV-Schutz-Lackformulierung im Flutverfahren aufgebracht, abgelüftet und danach für 30 min bei 50°C in einem Umlufttrockenschrank gehärtet. Die Dicke der so erhaltenen transparenten Beschichtung wurde mittels eines Eta SD 30 der Firma Eta Optik GmbH zu 7 bis 10 $\mu$m entlang der Platte in Flutrichtung bestimmt.

Untersuchung der Haftung der UV-Schutzschicht auf dem PC-Substrat:

Es wurden folgende Haftungstests a.) Klebebandabriss (verwendetes Klebeband 3M 898) ohne und mit Gitterschnitt (analog zu ISO 2409 bzw. ASTM D 3359); b.) Klebebandabriss nach 4 h Lagerung in kochendem Wasser; c.) Klebebandabriss nach 10 Tagen Lagerung in ca. 65°C warmem Wasser (analog ISO 2812-2 und ASTM 870-02) durchgeführt und alle bestanden, d.h. es kam zu keinerlei Abriss der Beschichtung (Bewertung 0 gemäß ISO 2409 bzw. 5B gemäß ASTM D 3359).

Bestimmung der UV-Absorber-Degradation von CGL 479 in der hergestellten UV-Schutz-Schicht auf Makrolon 2808 in einem Atlas Ci 5000 Weatherometer mit einer Bestrahlungsstärke von 0,75 W/m$^2$/nm bei 340 nm und einem Trocken/-Beregnungszyklus von 102:18 Minuten:

Die Anfangsextinktion der Beschichtung aus Beispiel 1 beträgt bei 340 nm 5.0 und weist eine Degradation von 0.049 MJ$^{-1}$ auf. Daraus ergibt sich eine UV-Filterwirkung dieser UV-Schutzschicht von deutlich mehr als 30 MJ/m2 bei 340 nm (entspricht 10 Jahre Florida) bzw. umgerechnet in eine Vergilbungszunahme nach 30 MJ/m2 bei 340 nm für Polycarbonat des Typs AL 2647 (mittelviskoses Bisphenol A-Polycarbonat mit UV-Stabilisator und Formtrennmittel; MFR 13 g/10min nach ISO1133 bei 300°C und 1,2kg) von $\Delta$ YI gleich 0,1 und erfüllt damit die erfmdungsgemäße Aufgabe nach 10 Jahren Florida ein $\Delta$ YI von nicht mehr als 3 Einheiten zu erreichen.

Der Yellowness-Index wird wie folgt berechnet: Man bestimmt zunächst die wellenlängenabhängige Vergilbung des Materials nach der spektralen Empfindlichkeitsmethode (Interpretation of the spectral sensivity and of the activation spectrum of polymers, P. Trubiroha, Tagungsband der XXII. Donauländergespräche, 17.8.2001, Berlin, Seite 4-1). Dann

berechnet man die spektrale Verteilung des UV-Lichtes der Sonne hinter der UV-Schutzschicht. Aus diesen beiden Datensätzen lässt sich auf bekannte Weise durch eine Faltung und Aufintegration über die Zeit die Vergilbung nach Bewitterung berechnen. (Grundsätzliches zur Lebensdauervorhersage in der Bewitterung, A. Geburtig, V. Wachtendorf, Tagungsband 34. Jahrestagung der Gesellschaft für Umweltsimulation, Umwelteinflüsse erfassen, simulieren und bewerten, 2.3. 2005, Pfinztal, Seite 159).

Bei Kenntnis der spektralen Empfindlichkeit SR, lässt sich die Vergilbung während der Bewitterung mit der folgenden Formel berechnen:

$$\Delta YI = \int_{0}^{T} \int_{280nm}^{400nm} \Gamma(\lambda) * 10^{-Ext(\lambda,t)} * SR(\lambda, YI)\, d\lambda\, dt$$

Darin ist $\Delta$ YI die Änderung des Gelbwerts YI des Substratmaterials, das durch den UV-Absorber geschützt werden muss. T ist die Bewitterungszeit und $\Gamma$ ist das Bewitterungsspektrum. Ext($\lambda$,t) ist die wellenlängenabhängige und mit der Zeit durch Degradation abnehmende Extinktion des UV-Absorbers und SR ($\lambda$,YI) die wellenlängen- und gelbwertabhängige spektrale Empfindlichkeit des Substratmaterials. Mit dieser Formel kann die Vergilbung des Substratmaterials berechnet werden. Da die Formel jedoch nicht anlalytisch lösbar ist, muss die Berechnung numerisch erfolgen.

Die Kombination aus UV-Absorber CGL 479 und Lackmatrix erfüllt also die Anforderungen hinsichtlich Extinktion und Degradation und führt daher zu einer geringen Vergilbung.

**Beispiel 2:**

Vergleichsbeispiel identisch mit Beispiel 1 bis auf die Verwendung eines nicht erfindungsgemäßen UV-Absorbers (Chimassorb 81). Die Herstellung der UV-Schutzschicht erfolgt analog zu Beispiel 1, wobei anstatt 10 Gew.% bezogen auf den Feststoffgehalt der Lackformulierung an CGL 479 10 Gew.-% bezogen auf den Feststoffgehalt der Lackformulierung an Chimassorb 81 (2-Hydroxy-4-(octyloxy)benzophenon der Firma Ciba Specialty Chemicals) eingesetzt wurde.

**Beispiel 3:**

Vergleichsbeispiel identisch mit Beispiel 1 bis auf die Verwendung einer für die mittlere Schichtdicke von ca. 8,5 $\mu$m zu geringen Menge von lediglich 1 Gew.-% an dem UV-Absorber CGL 479. Die Herstellung der UV-Schutzschicht erfolgt analog zu Beispiel 1, wobei anstatt 10 Gew.% bezogen auf den Feststoffgehalt der Lackformulierung an CGL 479 lediglich 1 Gew.% bezogen auf den Feststoffgehalt der Lackformulierung an CGL 479 eingesetzt wurde.

**Beispiel 4:**

Vergleichsbeispiel identisch mit Beispiel 3 bis auf die zusätzliche Verwendung des HALS Systems Tinuvin 123 (Bis(1-octyloxy-2,2,6,6-tetramethyl-4-piperidyl)decandisäureester, Formel IId mit n=8 und $R^1$=C8H17 der Firma Ciba Specialty Chemicals). Durch die dadurch ereichte zusätzliche Stabilisierung des UV-Absorbers CGL 479, wird trotz der allein zu geringen Menge an UV-Absorber von nur 1 Gew.% bei der mittleren Schichtdicke von ca. 8,5 $\mu$m wieder ein erfindungsgemäße Formulierung mit entsprechender Langzeitstabilität erreicht.

| Beispiel Nr. | UV-Absorber | Anfangsextinktion bei 340 nm | Degradation in $MJ^{-1}$ | Bemerkung |
|---|---|---|---|---|
| 1 | 10 Gew.-% CGL 479 | 5,0 | 0,049 | UV-Filter-Wirkung für $\geq$>30 MJ/m2 bei 340 nm, entspricht einem $\Delta$ YI von 0,1 nach dem Äquivalent von 10 Jahren Bewitterung in Florida |

(fortgesetzt)

| Beispiel Nr. | UV-Absorber | Anfangsextinktion bei 340 nm | Degradation in $MJ^{-1}$ | Bemerkung |
|---|---|---|---|---|
| 2 (Vergleichsbeispiel) | 10 Gew.-% Chimasorb 81 | 3,0 | 0,18 | UV-Filter-Wirkung für ca. 20 MJ/m2 bei 340 nm, entspricht einem Δ YI von 12,6 nach dem Äquivalent von 10 Jahren Bewitterung in Florida |
| 3 (Vergleichsbeispiel) | 1 Gew.% CGL 479 | 1,0 | 0,022 | UV-Filter-Wirkung für ca. 21 MJ/m2 bei 340 nm, entspricht einem Δ YI von 5,0 nach dem Äquivalent von 10 Jahren Bewitterung in Florida |
| 4 | 1 Gew. % CGL 479 + 1 Gew.-% Tinuvin 123 | 1,1 | < 0,001 | UV-Filter-Wirkung für ca. 30 MJ/m2 bei 340 nm, entspricht einem Δ YI von 1,8 nach dem Äquivalent von 10 Jahren Bewitterung in Florida |

**Beispiel 5:**

Die Verwendung des UV-Absorbers CGL 479 in einer Lackformulierung auf Basis von Polycarbonat, appliziert und gehärtet auf einem PC-Substrat, führt zu einer hoch LTV-Absorberhaltigen PC-Oberfläche, und offenbart durch die experimentell bestimmte, ungenügende UV-Filterwirkung die Bedeutung der Lackmatrix für den Aufbau einer erfindungsgemäßen UV-Schutzschicht.

Herstellung der Lackformulierung:

In 75 g Methylenchlorid wurden 25 g Bisphenol A Polycarbonat (Typ Makrolon 2808) gelöst und mit 125 mg CGL 479 (0,5 Gew.% bezogen auf den Feststoffgehalt der Lackformulierung) der Firma Ciba Specialty Chemicals (biphenylsubstituiertes Triazin der Formel I mit X=OCH(CH3)COOC8H17) versetzt.

Beschichtung der PC-Substrate mit der Lackformulierung:

Die verwendeten spritzgegossenen Polycarbonat-Platten in optischer Qualität aus Makrolon 2808 der Größe 10 x 15 x 0,32cm wurden gereinigt, getrocknet und mit ionisierter Luft abgeblasen. Anschließend wurde die Lackformulierung mit Hilfe eines Rakels aufgebracht, und bei Raumtemperatur bis zur Trockene ablüften gelassen. Die Dicke der so erhaltenen transparenten Beschichtung wurde mittels eines Eta SD 30 der Firma Eta Optik GmbH zu ca. 23 μm bestimmt.

Die Bestimmung der UV-Absorber-Abbaurate erfolgte, wie in Beispiel 1 beschrieben. Die Anfangsextinktion der Beschichtung aus Beispiel 5 beträgt bei 340 nm 1,3 und weist eine Degradation von 0,096 $MJ^{-1}$ auf und damit über 4 mal soviel wie in Beispiel 3, das über eine vergleichbare Anfangsextinktion verfügt. D.h. mit dieser Schutzschicht wird lediglich eine UV-Filterwirkung für ca.12 MJ/m2 erreicht. Umgerechnet in eine Vergilbungszunahme nach 30MJ/m2 bei 340 nm (entspricht 10 Jahre Florida) für Polycarbonat des Typs AL 2647 (siehe Beispiel 1) ergibt dies einen Δ YI - Wert von 18,1, womit die erfindungsgemäßen Anforderungen nicht erfüllt werden.

**Beispiel 6:**

Aufbau: Bisphenol A Polycarbonat (Typ Makrolon AL 2647 (mittelviskoses Bisphenol A-Polycarbonat mit UV-Stabilisator und Formtrennmittel; MFR 13 g/10min nach ISO1133 bei 300°C und 1,2 kg)) / UV-Schutz-Schicht mit CGL 479 als UV-Absorber in einer PMMA-Lackmatrix / abriebsfester Decklack auf Basis eines Siloxanlacks

Herstellung der Lackformulierung:

Zunächst wurde wieder wie unter Beispiel 1 beschrieben der Feststoffgehalt des Lackes bestehend aus einer 2 zu 1 Mischung des gelösten Polymethacrylats aus Beispiel 1 und dem als Verdünner eingesetzten Lösemittelgemischs (siehe ebenfalls Beispiel 1), diesmal zu 13,23 %, bestimmt.

12 g des gelösten Polymethacrylats (siehe Beispiel 1) werden mit 6 g des als Verdünner eingesetzten Lösemittelgemischs (siehe ebenfalls Beispiel 1)versetzt und ca. 5 min gerührt. Zu dieser homogenen Lösung werden nacheinander 0,119 g CGL 479 (entspricht 5 Gew.-% bezogen auf den oben bestimmten Feststoffgehalt ohne UV-Absorber), 0,024 g eines HALS-Systems (Tin. 123 (Bis(1-octyloxy-2,2,6,6-tetramethyl-4-piperidyl)decandisäureester, Formel IId mit n=8 & $R^1$=C8H17 der Firma Ciba Specialty Chemicals) (entspricht 1 Gew.-% bezogen auf den oben bestimmten Feststoffgehalt ohne die weiteren Zusätze), sowie 0,091 g eines Verlaufsmittels (BYK 347 der Firma BYK-Chemie GmbH) (entspricht 0,5 Gew.-% bezogen auf die gesamte Menge Lack ohne Verlaufsmittel) gegeben. Nach weiteren ca. 5 min rühren ist die Lackformulierung einsatzbereit.

Beschichtung der Substrate mit der UV-Schutz-Lackformulierung:

Die verwendeten spritzgegossenen Polycarbonat-Platten in optischer Qualität aus Makrolon AL2647 (s.o.) der Größe 10 x 15 x 0,32cm wurden gereinigt, mit obiger Lackformulierung beschichtet und anschließend gehärtet.

Überbeschichtung der UV-Schutz-Schicht mit einem abriebsfesten Decklack:

Der im Kühlschrank bei ca. 8°C gelagerte Siloxanlack (Silvue MP 100) der Firma SDC Technologie Inc. wird unter Rühren auf Raumtemperatur gebracht. Die mit der UV-Schutzschicht versehenen AL 2647 Platten werden auf der beschichteten Seite mit ionisierter Luft abgeblasen, mit dem Silvue MP 100 Lack im Flutverfahren in der gleichen Fließrichtung wie beim UV-SchutzLack überbeschichtet, anschließend abgelüftet und danach für 1 h bei 100°C in einem Umlufttrockenschrank gehärtet. Die Gesamtdicke der so erhaltenen optisch einwandfreien, transparenten zweilagigen Beschichtung aus UV-Schutz-Schicht und Decklack wurde mittels eines Eta SD 30 der Firma Eta Optik GmbH zu 8 bis 14 $\mu$m entlang der Platte in Flutrichtung bestimmt.

Untersuchung der Haftung PC / UV-Schutz-Schicht / Decklack:

Die Haftung des Aufbaus Makrolon AL2647 / UV-Schutz-Schicht / Silvue MP 100 wurde nach den in Beispiel 1 beschriebenen drei Methoden getestet und bestanden.

**Beispiel 7:**

Coextrudierte Folien mit dem Aufbau Bisphenol A Polycarbonat (Typ Makrolon 3108 (hochviskoses BPA-PC (MFR 6,5 g/10min nach ISO 1133 bei 300°C und 1,2 kg) ohne UV-Stabilisierung)) / UV-Schutz-Coexschicht aus CGX UVA 006 der Firma Ciba Specialty Chemicals (biphenylsubstituiertes Triazin der Formel I mit X=OCH2CH(CH2CH3) C4H9) in einer PMMA-Matrix aus Plexiglas 8H (PMMA mit einem Mw von 103,5 kg/mol bestimmt über GPC kalibriert auf PS) der Firma Röhm GmbH & Co. KG

Herstellung des UV-Schutz-Compounds:

Zu 14,25 kg bei 100°C 3 h vorgetrocknetem Plexiglas 8H wurden auf einem Zweischneckenextruder (ZSK 32/3) bei einer Drehzahl von 150 $min^{-1}$ 750 g des UV-Absorbers CGX UVA 006 (entspricht 5 Gew.-%) zudosiert. Die Massentemperatur betrug 260°C und das erhaltene Granulat war klar und transparent.

Herstellung der Coexfolie:

Bei der Herstellung der einseitigen Coexfolie wurde das Basismaterial Makrolon 3108 nach Vortrocknung (4h bei 120°C) auf dem Haupextruder (Drehzahl 65,7 $min^{-1}$, Massetemperatur 296°C und Massedruck 99 bar) aufgeschmolzen. Von der anderen Seite wurde das Coexmaterial bestehend aus dem bei 100°C 3h vorgetrocknetem UV-Schutz-Compound (siehe oben) über einen Coextruder (Drehzahl 10 $min^{-1}$, Massetemperatur 286°C und Massedruck 54 bar) zugeführt und gemeinsam mit dem Basismaterial über eine Plattendüse auf ein Walzwerk übertragen. Die so erhaltene Coexfolie hatte eine Basismaterialdicke von etwa 400µm und eine UV-Coexschutzschicht von etwa 10µm.

Die Bestimmung der UV-Absorber-Degradation von CGX UVA 006 in der UV-Coexschutzschicht auf Makrolon 3108 erfolgte wie in Beispiel 1 beschrieben. Die Anfangsextinktion der Coexschicht beträgt bei 340 nm 3,3 und weist eine Degradation von 0.036 $MJ^{-1}$ auf und bietet damit einen UV Schutzwirkung für >30 MJ/m2 bei 340nm, d.h. diese UV-Schutzschicht erfüllt die erfindungsgemäßen Anforderungen bezüglich Langzeitstabilität. Umgerechnet in eine Vergilbungszunahme nach 30 MJ/m2 bei 340nm (entspricht 10 Jahre Florida) für Polycarbonat des Typs AL 2647 (siehe Beispiel 1) ergibt dies einen $\Delta$ YI - Wert von 0,5.

__Beispiel 8:__

Vergleichsbeispiel analog Beispiel 7, aber unter Verwendung einer nicht erfindungsgemäßen Matrix für die UV-Coexschicht bestehend aus Plexiglas HW55 (Copolymerisat aus 83 Gew.-% Methylmethacrylat mit 17 Gew.% Styrol bestimmt über $^1$H-NMR; Mw=146,8 kg/mol bestimmt über GPC kalibriert auf PS)

Die Anfangsextinktion dieser aus Plexiglas HW55 mit 5 Gew.-% CGX UVA 006 analog zu Beispiel 7 hergestellten Coexschicht beträgt bei 340 nm 3,7 und weist eine Degradation von 0.19 $MJ^{-1}$ auf und bietet damit einen UV Schutzwirkung von lediglich 21 MJ/m2 bei 340nm, bzw. umgerechnet in eine Vergilbungszunahme nach 30 MJ/m2 bei 340 nm (entspricht 10 Jahre Florida) für Polycarbonat des Typs AL 2647 (siehe Beispiel 1) ein $\Delta$ YI - Wert von 8,3, d.h. diese UV-Schutzschicht erfüllt die erfmdungsgemäßen Anforderungen bezüglich Langzeitstabilität nicht.

## Patentansprüche

1. Mehrschichtiges Erzeugnis umfassend eine erste Schicht (A) und eine zweite Schicht (B), **dadurch gekennzeichnet, dass** die erste Schicht (A) eine UV-Schutzschicht aus Polyalkyl(meth)acrylat mit einer Schichtdicke von 1 µm bis 2 mm ist, die 0,01 bis 20 Gewichtsprozent (bezogen auf (A)) eines UV-Stabilisators gemäß Formel (I) enthält

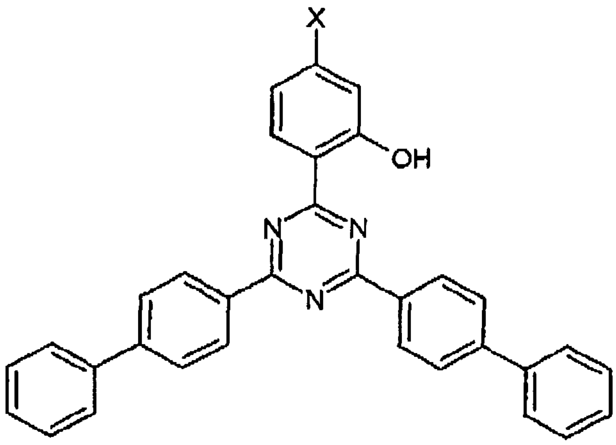

(I)

wobei X $OR^1$; $OCH_2CH_2OR^1$; $OCH_2CH(OH)CH_2OR^1$ oder $OCH(R^2)COOR^3$ bedeutet, dabei steht $R^1$ für jeweils verzweigtes oder unverzweigtes $C_1$-$C_{13}$-Alkyl, $C_2$-$C_{20}$-Alkenyl, $C_6$-$C_{12}$-Aryl oder -CO-$C_1$-$C_{18}$-Alkyl, $R^2$ steht für H oder verzweigtes oder unverzweigtes $C_1$-$C_8$-Alkyl, und $R^3$ steht für $C_1$-$C_{12}$-Alkyl; $C_2$-$C_1$-Alkenyl oder $C_5$-$C_6$-Cycloalkyl,
und die zweite. Schicht ein Polycarbonat enthält.

2. Mehrschichtiges Erzeugnis gemäß Anspruch 1, wobei Schicht (A) eine gehärtete Lackformulierung mit einer Schichtdicke von 1 bis 100 µm ist und der Anteil an UV-Absorber der Formel (I) 0,5 bis 20 Gew.-%, bezogen auf die Schicht (A) beträgt.

3. Mehrschichtiges Erzeugnis gemäß Anspruch 1, wobei Schicht (A) eine Koextrusionsschicht mit einer Schichtdicke

von 1 bis 500 μm ist und der Anteil an UV-Absorber der Formel (I) 0,05 bis 20 Gew.-% bezogen auf die Schicht (A) beträgt.

**4.** Mehrschichtiges Erzeugnis gemäß Anspruch 1, wobei Schicht (A) eine Folie mit einer Schichtdicke von 2 μm bis 2 mm ist und der Anteil an UV-Absorber der Formel (I) 0,01 bis 20 Gew.-% bezogen auf die Schicht (A) beträgt.

**5.** Mehrschichtiges Erzeugnis gemäß einem der Ansprüche 1 bis 2, **dadurch gekennzeichnet, dass** die Schicht (A) bis zu 5 Gew.-% bezogen) auf die Schicht (A) eines Stabilisators der Formel (II) enthält

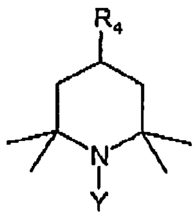

(II)

wobei Y für H; $R^1$ oder $OR^1$ steht und $R^1$ die gleiche Bedeutung wie in Formel (I) hat und
$R^4$ steht für $-Z-R^5-Z-R^6$ oder

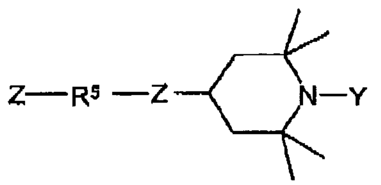

oder

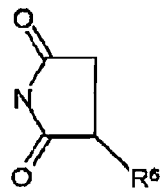

wobei-

$\cdot Z\cdot$ eine divalente fünktionolle Gruppe wie $\cdot COO\cdot$; $\cdot NH\cdot$ oder $\cdot NHCO\cdot$ist
$\cdot R^5\cdot$ ein divalenter organischer Rest wie$\cdot(CH_2)_n\cdot$ mit n=0 bis 12; $C{=}CH\text{-}Ph\text{-}OCH_3$ ;

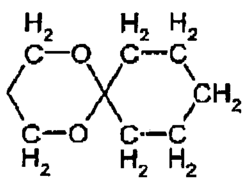

oder

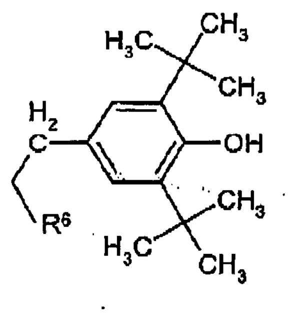

ist und
$R^6$ H oder $C_1$-$C_{20}$Alkyl ist.

**6.** Mehrschichtiges Erzeugnis gemäß Anspruch 2 **dadurch gekennzeichnet, dass** die Schicht (A) 0,5 bis 2 Gew.% bezogen auf die Schicht (A) eines Stabilisators der Formel (II) enthält

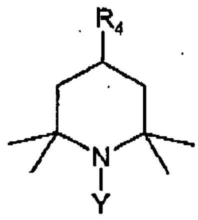

(II)

wobei Y und $R^4$ dieselbe Bedeutung wie in Anspruch 5 haben.

**7.** Mehrschichtiges Erzeugnis gemäß einem der Ansprüche 1 bis 6, **dadurch gekennzeichnet, dass** es eine zusätzliche Schicht (C) aufweist, wobei die Schicht (C) eine UV-Schutz-schicht aus Polyalkyl(meth)acrylat mit einer Schichtdicke von 1 $\mu$m bis 2 mm ist, die 0.01 bis 20 Gewichtsprozent (bezogen auf (A)) eines UV-Stabilisators gemäß Formel (I) enthält

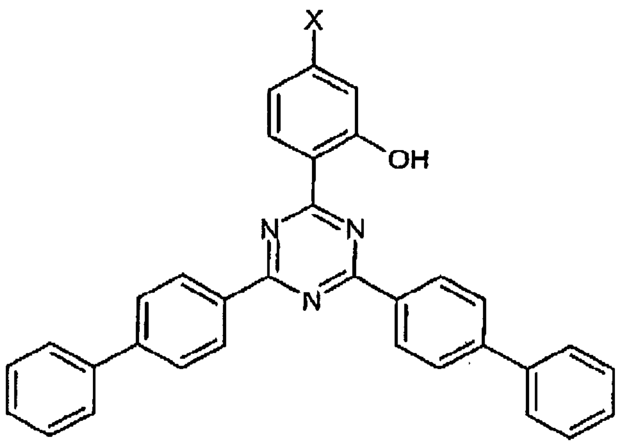

(I)

wobei X $OR^1$; $OCH_2CH_2OR^1$; $OCH_2CH(OH)CH_2OR^1$ oder $OCH(R^2)COOR^3$ bedeutet, wobei $R^1$ für jeweils verzweigtes oder unverzweigtes $C_1$-$C_{13}$-Alkyl, $C_2$-$C_{20}$-Alkenyl, $C_6$-$C_{12}$-Aryl oder -CO-$C_1$-$C_{18}$Alkyl steht, $R_2$ für H oder verzweigtes oder unverzweigtes $C_1$-$C_8$-Alkyl steht, und $R^3$ für $C_1$-$C_{12}$-Alkyl; $C_2$-$C_{12}$-Alkenyl oder $C_5$-$C_6$-Cycloalkyl steht, und
die Schichtfolge (A)-(B)-(C) beträgt.

**8.** Mehrschichtiges Erzeugnis gemäß einem der Ansprüche 1 bis 7, **dadurch gekennzeichnet, dass** es auf der Schicht (A) (und optional auch auf Schicht (C) oder Schicht (B)) eine zusätzliche kratzfeste bzw. abriebbeständige Lackschicht auf Basis eines Polysiloxanlacks, einer Silikatbeschichtung oder einer nanopartikelhaltigen Formulierung aufweist.

**9.** Mehrschichtiges Erzeugnis gemäß einem der Ansprüche 1 bis 8 ausgewählt aus der Gruppe bestehend aus Platten, Folien und dreidimensionalen Formteilen.

**10.** Mehrschichtiges Erzeugnis gemäß Anspruch 1, wobei in Formel (I) X für $OR^1$ mit
$R^1 = CH_2CH(CH_2CH_3)C_4H_9$ oder
X für $OCH(R^2)COOR^3$ mit $R^2=CH_3$ und $R^3=C_8H_{17}$
steht.

**11.** Verwendung von mehrschichtigen Erzeugnissen gemäß einem der Ansprüche 1 bis 9 für Außenanwendungen mit dauerhaft hohen Anforderungen hinsichtlich des visuellen Eindrucks, insbesondere für Verscheibung.

## Claims

1. Multilayer product encompassing a first layer (A) and a second layer (B), **characterized in that** the first layer (A) is a UV-protection layer made of polyalkyl(meth)acrylates with a layer thickness of from 1 μm to 2 mm which comprises from 0.01 to 20 percent by weight (based on (A)) of a UV stabilizer according to formula (I)

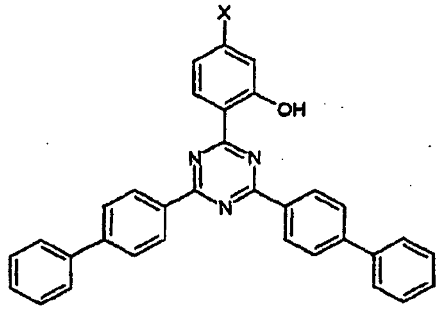

(I)

where X $OR^1$; $OCH_2CH_2OR^1$; $OCH_2CH(OH)CH_2OR^1$ or $OCH(R^2)COOR^3$ where $R^1$ is respectively branched or unbranched $C_1$-$C_{13}$-alkyl, $C_2$-$C_{20}$-alkenyl, $C_6$-$C_{12}$-aryl or -CO-$C_1$-$C_{18}$-alkyl, $R^2$ is H or branched or unbranched $C_1$-$C_8$-alkyl, and $R^3$ is $C_1$-$C_{12}$-alkyl; $C_2$-$C_{12}$-alkenyl or $C_5$-$C_6$-cycloalkyl,
and the second layer comprises a polycarbonate.

2. Multilayer product according to Claim 1, where layer (A) is a cured coating formulation with a layer thickness of from 1 to 100 μm and the proportion of UV absorber of the formula (I) is 0.5 to 20% by weight, based on the layer (A).

3. Multilayer product according to Claim 1, where layer (A) is a coextruded layer with a layer thickness of from 1 to 500 μm and the proportion of UV absorber of the formula (I) is from 0.05 to 20% by weight, based on the layer (A).

4. Multilayer product according to Claim 1, where layer (A) is a foil with a layer thickness of from 2 μm to 2 mm and the proportion of UV absorber of the formula (I) is from 0.01 to 20% by weight, based on the layer (A).

5. Multilayer product according to any of Claims 1 to 2, **characterized in that** the layer (A) comprises up to 5% by weight, based on the layer (A), of a stabilizer of the formula (II)

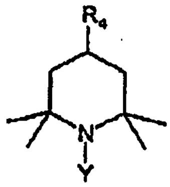

(II)

where Y is H; $R^1$ or $OR^1$ and the definition of $R^1$ is as in formula (I) and $R^4$ is -Z-$R^5$-Z-$R^6$ or

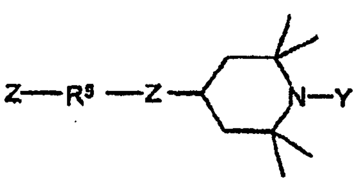

or

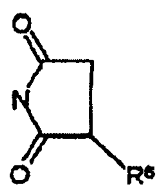

where

-Z- is a divalent functional group such as -COO-; -NH- or -NHCO-

$-R^5-$ is a divalent organic moiety such as $-(CH_2)_n-$, where n = from 0 to 12; $C{=}CH\text{-}Ph\text{-}OCH_3$;

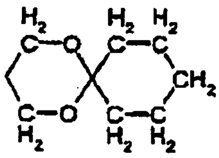

or

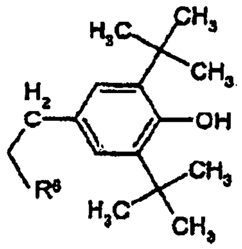

and
$R^6$ is H or $C_1$-$C_{20}$-alkyl.

**6.** Multilayer product according to Claim 2, **characterized in that** the layer (A) comprises from 0.5 to 2% by weight, based on the layer (A), of a stabilizer of the formula (II)

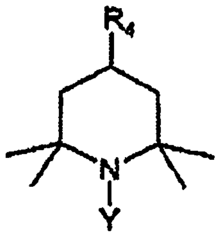

(II)

where the definition of Y and $R^4$ is the same as in Claim 5.

**7.** Multilayer product according to any of Claims 1 to 6, **characterized in that** it has an additional layer (C), where the layer (C) is a UV-protection layer made of polyalkyl (meth)acrylates with a layer thickness of from 1 μm to 2 mm which comprises from 0.01 to 20 percent by weight (based on (A)) of a UV stabilizer according to formula (I)

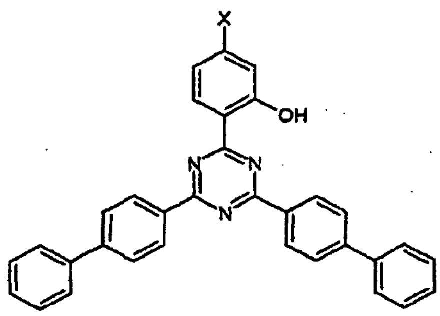

(I)

where X $OR^1$; $OCH_2CH_2OR^1$; $OCH_2CH(OH)CH_2OR^1$ or $OCH(R^2)COOR^3$ where $R^1$ is respectively branched or unbranched $C_1$-$C_{13}$-alkyl, $C_2$-$C_{20}$-alkenyl, $C_6$-$C_{12}$-aryl or -CO-$C_1$-$C_{18}$-alkyl, $R^2$ is H or branched or unbranched $C_1$-$C_8$-alkyl, and $R^3$ is $C_1$-$C_{12}$-alkyl; $C_2$-$C_{12}$-alkenyl or $C_5$-$C_6$-cycloalkyl,
and the layer sequence is (A)-(B)-(C).

**8.** Multilayer product according to any of Claims 1 to 7, **characterized in that**, on the layer (A) (and also optionally on layer (C) or layer (B)), it has an additional scratch-resistant and/or abrasion-resistant coating layer based on a polysiloxane coating, on a silicate coating or on a nanoparticle-containing formulation.

**9.** Multilayer product according to any of Claims 1 to 8, selected from the group consisting of sheets, foils and three-dimensional mouldings.

10. Multilayer product according to Claim 1, where, in Formula (I), X is $OR^1$ where
$R^1 = CH_2CH(CH_2CH_3)C_4H_9$ or
X is $OCH(R^2)COOR^3$, where $R^2 = CH_3$ and $R^3 = C_8H_{17}$.

11. Use of multilayer product according to any of Claims 1 to 9 for outdoor applications with long-term stringent requirements in respect of appearance, in particular for panelling.

**Revendications**

1. Produit à plusieurs couches comprenant une première couche (A) et une deuxième couche (B), **caractérisé en ce que** la première couche (A) est une couche de protection contre les UV en poly((méth)acrylate d'alkyle) présentant une épaisseur de couche de 1 μm à 2 mm, qui contient 0,01 à 20% en poids (par rapport à (A)) d'un stabilisateur aux UV selon la formule (I)

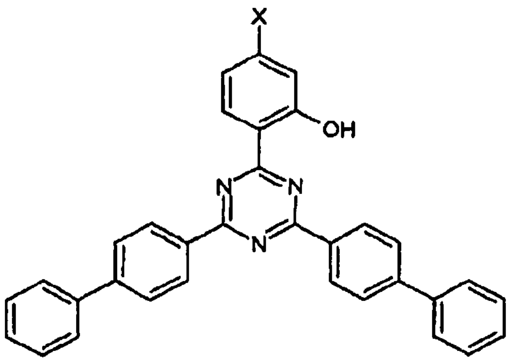
(I)

où X signifie $OR^1$ ; $OCH_2CH_2OR^1$ ; $OCH_2CH(OH)CH_2OR^1$ ou $OCH(R^2)COOR^3$, avec $R^1$ représentant à chaque fois $C_1$-$C_{13}$-alkyle ramifié ou non ramifié, $C_2$-$C_{20}$-alcényle, $C_6$-$C_{12}$-aryle ou -CO-$C_1$-$C_{18}$-alkyle, $R^2$ représentant H ou $C_1$-$C_8$-alkyle ramifié ou non ramifié, et $R^3$ représentant $C_1$-$C_{12}$-alkyle ; $C_2$-$C_{12}$-alcényle ou $C_5$-$C_6$-cycloalkyle, et la deuxième couche contient un polycarbonate.

2. Produit à plusieurs couches selon la revendication 1, où la couche (A) est une formulation de laque durcie présentant une épaisseur de couche de 1 à 100 μm et la proportion d'absorbant UV de formule (I) est de 0,5 à 20% en poids, par rapport à la couche (A).

3. Produit à plusieurs couches selon la revendication 1, où la couche (A) est une couche coextrudée présentant une épaisseur de couche de 1 à 500 μm et la proportion d'absorbant UV de formule (I) est de 0,05 à 20% en poids, par rapport à la couche (A).

4. Produit à plusieurs couches selon la revendication 1, où la couche (A) est une feuille présentant une épaisseur de couche de 2 μm à 2 mm et la proportion d'absorbant UV de formule (I) est de 0,01 à 20% en poids, par rapport à la couche (A).

5. Produit à plusieurs couches selon l'une quelconque des revendications 1 à 2, **caractérisé en ce que** la couche (A) contient jusqu'à 5% en poids, par rapport à la couche (A), d'un stabilisateur de formule (II)

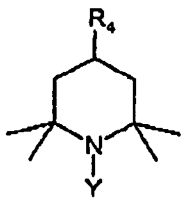
(II)

où Y représente H ; $R^1$ ou $OR^1$ et $R^1$ présente la même signification que dans la formule (I) et $R^4$ représente $-Z-R^5-Z-R^6$ ou

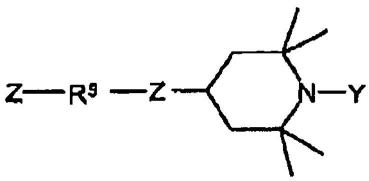

ou

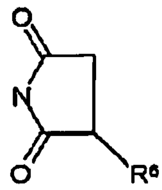

où

-Z- représente un groupe fonctionnel divalent tel que -COO- ; -NH- ou -NHCO-

$-R^5-$ représente un radical organique divalent tel que $(CH_2)_n$ avec n = 0 à 12 ; $C=CH-Ph-OCH_3$ ;

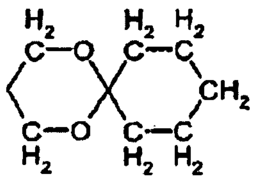

ou

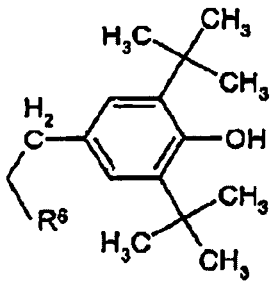

$R^6$ représente H ou $C_1$-$C_{20}$alkyle.

6. Produit à plusieurs couches selon la revendication 2, **caractérisé en ce que** la couche (A) contient 0,5 à 2% en poids, par rapport à la couche (A), d'un stabilisateur de formule (II)

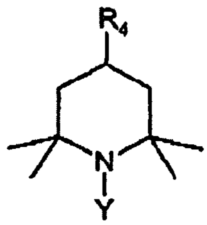

(II)

où Y et $R^4$ ont la même signification que celle dans la revendication 5.

7. Produit à plusieurs couches selon l'une quelconque des revendications 1 à 6, **caractérisé en ce qu'**il présente une couche supplémentaire (C), la couche (C) étant une couche de protection contre les UV en poly((méth)acrylate d'alkyle) présentant une épaisseur de couche de 1 µm à 2 mm, qui contient 0,01 à 20% en poids (par rapport à (A)) d'un stabilisateur aux UV selon la formule (I)

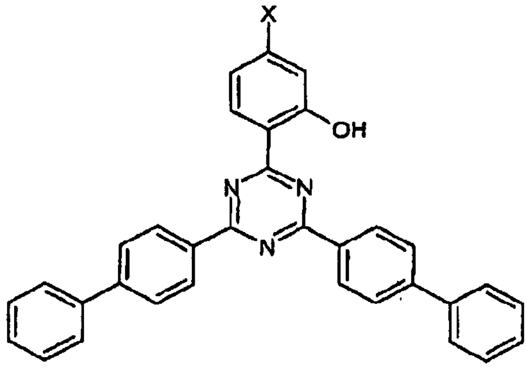

(I)

où X signifie $OR^1$ ; $OCH_2CH_2OR^1$ ; $OCH_2CH(OH)CH_2OR^1$ ou $OCH(R^2)COOR^3$, où $R^1$ représente à chaque fois $C_1$-$C_{13}$-alkyle ramifié ou non ramifié, $C_2$-$C_{20}$-alcényle, $C_6$-$C_{12}$-aryle ou -CO-$C_1$-$C_{18}$-alkyle, $R^2$ représente H ou $C_1$-$C_8$-alkyle ramifié ou non ramifié, et $R^3$ représente $C_1$-$C_{12}$-alkyle ; $C_2$-$C_{12}$-alcényle ou $C_5$-$C_6$-cycloalkyle, et l'ordre des couches est (A)-(B)-(C).

8. Produit à plusieurs couches selon l'une quelconque des revendications 1 à 7, **caractérisé en ce qu'**il présente sur la couche (A) (et éventuellement aussi sur la couche (C) ou la couche (B)) une couche de laque supplémentaire, résistante aux griffes ou à l'usure à base d'une laque de polysiloxane, un revêtement silicaté ou une formulation contenant des nanoparticules.

9. Produit à plusieurs couches selon l'une quelconque des revendications 1 à 8, choisi dans le groupe constitué par les plaques, les feuilles et les corps façonnés tridimensionnels.

10. Produit à plusieurs couches selon la revendication 1, où, dans la formule (I), X représente $OR^1$ avec

$R^1 = CH_2CH(CH_2CH_3)C_4H_9$ ou
X représente $OCH(R^2)COOR^3$ avec $R^2 = CH_3$ et $R^3 = C_8H_{17}$.

11. Utilisation d'objets à plusieurs couches selon l'une quelconque des revendications 1 à 9 pour des applications extérieures avec des exigences élevées durables en ce qui concerne l'impression visuelle, en particulier pour le vitrage.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0110221 A
- EP 0320632 A
- EP 0247480 A
- EP 0500496 A
- GB 2290745 A
- US 20040209020 A
- US 20050031855 A
- US 5783307 A
- US 5061558 A
- WO 9628431 A
- DE 19739797
- WO 0066675 A
- US 6225384 B
- US 6255483 B
- EP 1308084 A
- FR 2812299
- DE 4238123 A


### In der Beschreibung aufgeführte Nicht-Patentliteratur


- **Schnell.** Chemistry and Physics of Polycarbonats, Polymer Reviews. Interscience Publishers, 1964, vol. 9
- Synthesis of Poly(ester)carbonate Copolymers. **D.C. PREVORSEK ; B.T. DEBONA ; Y. KESTEN.** Journal of Polymer Science, Polymer Chemistry Edition. Corporate Research Center, Allied Chemical Corporation, 1980, vol. 19, 75-90
- Polycarbonates. **D. Freitag ; U. Grigo ; P.R. Müller ; N. Nouvertne ; BAYER AG.** Encyclopedia of Polymer Science and Engineering. 1988, vol. 11, 648-718
- Polycarbonate. **Dres. U. Grigo ; K. Kircher ; P.R. Müller.** Kunststoff-Handbuch, Band 3/1, Polycarbonate, Polyacetale, Polyester, Celluloseester. Carl Hanser Verlag, 1992, vol. 3/1, 117-299
- **P. Trubiroha.** *Tagungsband der XXII. Donauländergespräche,* 17. August 2001, 4-1
- **Bewitterung, A. Geburtig ; V. Wachtendorf.** *Tagungsband 34. Jahrestagung der Gesellschaft für Umweltsimulation, Umwelteinflüsse erfassen, simulieren und bewerten,* 02. Marz 2005, 159